Europäisches Patentamt

(19) European Patent Office

Office européen des brevets

(11) Publication number : **0 259 914 B1**

(12) **EUROPEAN PATENT SPECIFICATION**

(45) Date of publication of patent specification :
04.03.92 Bulletin 92/10

(51) Int. Cl.⁵ : **C08G 67/02, B01J 31/00**

(21) Application number : **87201585.4**

(22) Date of filing : **20.08.87**

(54) **Novel catalyst compositions and process for olefin/CO copolymerization.**

(30) Priority : **22.08.86 NL 8602138**

(43) Date of publication of application :
**16.03.88 Bulletin 88/11**

(45) Publication of the grant of the patent :
**04.03.92 Bulletin 92/10**

(84) Designated Contracting States :
**AT BE CH DE ES FR GB IT LI SE**

(56) References cited :
**EP-A- 0 170 311**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Drent, Eit
Badhuisweg 3
NL-1031 CM Amsterdam (NL)**
Inventor : **Van Leeuwen, Petrus Wilhelmus N.
M.
Badhuisweg 3
NL-1031 CM Amsterdam (NL)**
Inventor : **Wife, Richard Lewin
Badhuisweg 3
NL-1031 CM Amsterdam (NL)**

## Description

The invention relates to novel compositions suitable for use as catalysts in the preparation of polymers of carbon monoxide with one or more olefinically unsaturated compounds.

High molecular weight linear polymers of carbon monoxide with one or more olefinically unsaturated organic compounds (for the sake of brevity referred to as A), in which the monomer units occur in an alternating order and which therefore consist of units of the general formula -(CO)-A'-, wherein A' represents a monomer unit originating in a monomer A used, can be prepared by using catalyst compositions based upon:

a) a palladium compound,
b) an anion of an acid with a pKa of less than 2, with the proviso that the acid is not a hydrohalogenic acid, and
c) a tri(hydrocarbyl)phosphine.

Research carried out by the Applicant into these catalyst compositions has shown that their activity can be considerably enhanced when in the phosphine used as the component c) at least one of the hydrocarbyl groups is replaced by a group containing one or more nitrogen atoms which bear no hydrogen, the configuration of which group is such that each one of the nitrogen atoms in the phosphorus/ nitrogen compound thus obtained is connected to the phosphorus atom by an organic bridging group which contains at least one carbon atom in the bridge. It has been found more in general that catalyst compositions possessing attractive activity for the polymerization of carbon monoxide with one or more olefinically unsaturated organic compounds can be composed on the basis of the afore-mentioned components a) and b) and, as component c), a compound in which there occur one phosphorus atom and one or more nitrogen atoms, which atoms bear no hydrogen, in which compound each one of the nitrogen atoms is connected to the phosphorus atom by an organic bridging group which contains at least one carbon atom in the bridge, and which compound may be regarded as being derived from tri(hydrocarbyl) phosphine by replacing at least one of the hydrocarbyl groups therein by a group containing one or more nitrogen atoms.

It should be noted that EP-A-170311 discloses catalyst compositions based upon similar components a) and b) and a component c) which is defined as a chelate ligand comprising an organic compound containing as coordinating atoms at least two atoms of Group Va of the Periodic Table of the Elements, which are connected through a chain comprising 2 to 6 carbon atoms. However, this document relates to the dimerisation of aliphatic monoolefins, and the nomenclature employed for the components c) is not clear, for which reason it is impossible to identify without ambiguity the structures of all compounds given as examples within the broad scope of the claim. Catalyst compositions based upon the components a) and b) and a phosphorus/nitrogen compound as described hereinbefore as component c), are novel, as well as their use in the copolymerisation of carbon monoxide with one or more olefinically unsaturated compounds.

The present patent application therefore relates to novel catalyst compositions based upon:

a) a palladium compound,
b) an anion of an acid with a pKa of less than 2, with the proviso that this acid is not a hydrohalogenic acid, and
c) a compound in which there occur one phosphorus atom and one or more nitrogen atoms which atoms bear no hydrogen, in which compound each one of the nitrogen atoms is connected to the phosphorus atom by an organic bridging group which contains at least one carbon atom in the bridge, and which compound may be regarded as being derived from tri(hydrocarbyl) phosphine by replacing at least one of the hydrocarbyl groups therein by a group containing one or more nitrogen atoms.

The patent application further relates to the use of these catalyst compositions in the preparation of polymers of carbon monoxide with one or more olefinically unsaturated compounds as well as to the polymers thus prepared and shaped objects consisting at least partly of these polymers.

The palladium compound used as component a) is preferably a palladium salt of a carboxylic acid and in particular palladium acetate. Examples of suitable acids with a pKa of less than 2 (determined in aqueous solution at 18 °C) the anion of which should be present in the catalyst composition as component b), are sulphuric acid, sulphonic acids, such as para-toluenesulphonic acid and carboxylic acids, such as trifluoroacetic acid. Preference is given to para-toluenesulphonic acid and trifluoroacetic acid. Preferably, component b) is present in the catalyst compositions in a quantity of from 0.5 to 200, and in particular of from 1.0 to 100, equivalents per gram atom of palladium. Component b) may be incorporated in the catalyst compositions either in the form of an acid or as a salt. Examples of eligible salts are non-noble transition metal salts. When component b) is used in the form of a non-noble transition metal salt, preference is given to a copper salt. If desired, components a) and b) may be combined in a single compound. An example of such a compound is the complex $Pd(CH_3CN)_2(O_3S\text{-}C_6H_4\text{-}CH_3)_2$, which can be prepared by reaction in acetonitrile of either palladium chloride with silver para-tosylate, or palladium acetate with para-toluenesulphonic acid.

The component c) preferably used in the catalyst compositions according to the invention is a phosphorus/nitrogen compound which may be regarded as being derived from triphenyl phosphine by replacing at least one of the phenyl groups therein by a group containing one or more nitrogen atoms. The organic bridging groups through which the phosphorus atom is connected to each one of the nitrogen atoms preferably contain at most three carbon atoms in the bridges. Special preference is given to phosphorus/nitrogen compounds which may be regarded as being derived from triphenyl phosphine by replacing no more than one of the phenyl groups therein by a group containing no more than one nitrogen atom.

Examples that may be mentioned of phosphorus/nitrogen compounds which may be regarded as being derived from triphenyl phosphine by replacing one of the phenyl groups therein by a group containing a single nitrogen atom and in which compounds the bridging group which connects the phosphorus to the nitrogen atom contains a single carbon atom, are
2-pyridyl-diphenyl phosphine,
2-(diphenyl-phosphino)-1-methyl-1-pyrrole
1-(diphenyl-phosphino)-N,N-diphenyl formamide, and
1-[(diphenyl-phosphino)methyl]-2,5-pyrrolidinedione.

Examples that may be mentioned of phosphorus/nitrogen compounds which can be regarded as being derived from triphenyl phosphine by replacing one of the phenyl groups therein by a group containing one nitrogen atom, and in which compounds the bridging group which connects the phosphorus atom with the nitrogen atom contains two carbon atoms, are
1-[2-diphenyl-phosphino)ethyl]-2-pyrrolidinone,
2-(diphenyl-phosphino)-N,N-diphenyl acetamide,
(2-isocyano-ethyl)diphenyl phosphine,
8-(diphenyl-phosphino)-quinoline,
ortho-(diphenyl-phosphino)-N,N-dimethyl aniline,
2-(diphenyl-phosphino)-triethyl amine,
2-[(diphenyl-phosphino)methyl]-pyridine, and
N-[(diphenyl-phosphino)methyl]-dietyl amine.

Examples that may be mentioned of phosphorus/nitrogen compounds which can be regarded as being derived from triphenyl phosphine by replacing one of the phenyl groups therein by a group containing one nitrogen atom, and in which compounds the bridging group which connects the phosphorus atom to the nitrogen atom contains three carbon atoms, are
2-cyano-ethyl-diphenyl phosphine,
2-[2-(diphenyl-phosphino)ethyl]-pyridine,
2-[(diphenyl-phosphino)methyl]-N,N-dimethyl benzamine,
2-(diphenyl-phosphino)-N,N-dimethyl benzenemethanamine,
2-(diphenyl-phosphino)-N,N-diethyl benzamine, and
3-(diphenyl-phosphino)-N,N-dimethyl propionamide.

Examples that may be mentioned of phosphorus/nitrogen compounds which can be regarded as being derived from triphenyl phosphine by replacing two or three phenyl groups therein by a group containing one nitrogen atom, are
bis(2-pyridyl)phenyl phosphine, and
tris(2-cyano-ethyl)phosphine.

An example of a phosphorus/nitrogen compound which can be regarded as being derived from triphenyl phosphine by replacing one of the phenyl groups therein by a group containing more than one nitrogen atom that may be mentioned is 2-(diphenyl-phosphino)-1,3,5-triazine.

Attractive catalyst compositions according to the invention can be composed by using any one of the following five phosphorus/nitrogen compounds as component c)
2-cyano-ethyl-diphenyl phosphine,
tris(2-cyano-ethyl)phosphine,
2-pyridyl-diphenyl phosphine,
bis(2-pyridyl)phenyl phosphine, and
3-(diphenyl-phosphino)-N,N-dimethyl propionamide.

In the catalyst compositions according to the invention the phosphorus/nitrogen compound is preferably used in a quantity of 0.1-100, and in particular of 0.5-50, mol per mol of palladium compound.

Preferably, a quinone is incorporated in addition into the catalyst compositions according to the invention as a component d). Along with the benzoquinones which may or may not be substituted, other quinones, such as naphthaquinones and anthraquinones which may or may not be substituted, are also eligible. Preference is given to benzoquinones, particularly 1,4-benzoquinone. The quantity of quinone used is preferably 1-10000 and in particular 10-5000, mol per gram atom of palladium.

The polymerization by using catalyst compositions according to the invention is preferably carried out in a liquid diluent. Very suitable liquid diluents are lower alcohols, such as methanol and ethanol. Optionally, the polymerization may also be carried out in the gas phase.

Eligible olefinically unsaturated organic compounds that can be polymerized with carbon monoxide with the aid of the catalyst compositions according to the invention are both compounds which consist exclusively of carbon and hydrogen and compounds which, in addition to carbon and hydrogen, contain one or more hetero atoms. The catalyst compositions according to the invention are preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1 as well as styrene and alkyl-substituted styrenes, such as p-methyl styrene and p-ethyl styrene. The catalyst compositions according to the invention are especially suitable for use in the preparation of copolymers of carbon monoxide with ethene and in the preparation of terpolymers of carbon monoxide with ethene and with a further olefinically unsaturated hydrocarbon, in particular propene.

The quantity of catalyst composition used in the preparation of the polymers may vary within wide ranges. Preferably, per mol of olefinically unsaturated compound to be polymerized, such a quantity of catalyst is used as to contain $10^{-7}$-$10^{-3}$ and in particular $10^{-6}$-$10^{-4}$ gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the preparation of the polymers according to the invention need not be pure. It may contain such contaminants as hydrogen, carbon dioxide and nitrogen.

The invention is now illustrated with the aid of the following examples.

## Comparative Example 1

A carbon monoxide/ethene copolymer was prepared as follows. A magnetically stirred autoclave of 250 ml capacity was charged with a catalyst solution comprising
50 ml of methanol,
0.1 mmol of palladium acetate,
2.0 mmol of para-toluenesulphonic acid and
0.3 mmol of triphenyl phosphine.
After any air present in the autoclave had been removed by evacuation, ethene was introduced with pressure until a pressure of 30 bar was reached, followed by carbon monoxide until a pressure of 60 bar was reached. Subsequently, the contents of the autoclave were heated to 110 °C. After 5 hours the polymerization was terminated by cooling to room temperature and then releasing the pressure. The polymer formed was filtered off, washed with methanol and dried in vacuo at room temperature. The polymerization rate was 5 g copolymer/g palladium/hour.

## Example 2

A carbon monoxide/ethene copolymer was prepared in substantially the same way as the copolymer of Example 1, the differences being:
a) the catalyst solution contained 0.2 mmol instead of 0.1 mmol of palladium acetate, and 0.5 mmol of 2-cyano-ethyl-diphenyl phosphine instead of 0.3 mmol of triphenyl phosphine, and
b) the reaction temperature was 80 °C instead of 110 °C. The polymerization rate was 23.6 g copolymer/g palladium/hour.

## Example 3

A carbon monoxide/ethene copolymer was prepared in substantially the same way as the copolymer of Example 1, the differences being:
a) the catalyst solution contained 0.2 mmol instead of 0.1 mmol of palladium acetate, and 0.5 mmol of tris(2-cyano-ethyl) phosphine instead of 0.3 mmol of triphenyl phosphine, and
b) the reaction temperature was 100 °C instead of 110 °C. The polymerization rate was 40 g copolymer/g palladium/hour.

## Example 4

A carbon monoxide/ethene copolymer was prepared in substantially the same way as the copolymer of Example 1, the differences being:
a) the catalyst solution contained 3.0 mmol 2-pyridyl-diphenyl phosphine instead of 0.3 mmol of triphenyl phosphine and in addition contained 20 mmol of 1,4-benzoquinone, and
b) the reaction temperature was 80 °C instead of 110 °C. The polymerization rate was 100 g copolymer/g palladium/hour.

## Example 5

A carbon monoxide/ethene copolymer was prepared in substantially the same way as the copolymer of Example 1, the differences being:
a) the catalyst solution contained 3.0 mmol of bis(2-pyridyl)-phenyl phosphine instead of 0.3 mmol of triphenyl phosphine and in addition contained 20 mmol of 1,4-benzoquinone, and
b) the reaction temperature was 100 °C instead of 110 °C. The polymerization rate was 37.8 g copolymer/g palladium/hour.

## Example 6

A carbon monoxide/ethene copolymer was prepared in substantially the same way as the copolymer of Example 1, the differences being:
a) the catalyst solution contained 0.15 mmol of 3-(diphenyl-phosphino)-N,N-dimethyl propionamide instead of 0.3 mmol of triphenyl phosphine and further contained 1.0 mmol instead of 2.0 mmol of para-toluenesulphonic acid, and
b) the reaction temperature was 105 °C instead of 110 °C. The polymerization rate was 28.3 g copolymer/g palladium/hour.

With the aid of $^{13}$C-NMR analysis it was established that the carbon monoxide/ethene copolymers prepared according to Examples 1-6 had a linear alternating structure and therefore consisted of units of the formula -CO-$(C_2H_4)$-. The copolymers had a melting point of 257 °C. Of Examples 1-6, Examples 2-6 are examples according to the invention. Example 1 falls outside the scope of the invention and has been included in the patent application for comparison.

Comparison of Example 1 (carried out at 110 °C and using a catalyst composition which contained a triaryl phosphine as the component c) with Examples 2-6 (carried out at temperatures of 80-105 °C and using catalyst compositions according to the invention which contained a phosphorus/nitrogen compound as the component c) shows that when the catalyst compositions according to the invention are used, high reaction rates can be achieved at lower temperatures.

## Claims

1. Catalyst compositions, based upon
a) a palladium compound,
b) an anion of an acid with a pKa of less than 2, with the proviso that the acid is not a hydrohalogenic acid, and
c) a compound in which there occur one phosphorus atom and one or more nitrogen atoms which atoms bear no hydrogen, in which compound each one of the nitrogen atoms is connected to the phosphorus atom by an organic bridging group which contains at least one carbon atom in the bridge, and which compound may be regarded as being derived from tri(hydrocarbyl) phosphine by replacing at least one of the hydrocarbyl groups therein by a group containing one or more nitrogen atoms.

2. Catalyst compositions as claimed in claim 1, characterized in that they are based upon a palladium salt of a carboxylic acid, such as palladium acetate, as component a) and an anion of a sulphonic acid, such as para-toluenesulphonic acid, or of a carboxylic acid, such as trifluoroacetic acid, as component b) and that component b) is present in the catalyst compositions in a quantity of from 1.0 to 100 equivalents per gram atom of palladium.

3. Catalyst compositions as claimed in claim 1 or 2, characterized in that component b) is incorporated in the catalyst compositions in the form of an acid or as a non-noble transition metal salt, such as a copper salt.

4. Catalyst compositions as claimed in one or more of claims 1-3, characterized in that as component c) they include a phosphorus/nitrogen compound in which the organic bridging groups which connect the phosphorus atom to the nitrogen atoms contain at most three carbon atoms.

5. Catalyst compositions as claimed in one or more of claims 1-4, characterized in that as component c) they include a phosphorus/nitrogen compound which may be regarded as being derived from triphenyl phosphine by replacing at least one of the phenyl groups therein by a group containing one or more nitrogen atoms.

6. Catalyst compositions as claimed in claim 5, characterized in that as component c) they include a phosphorus/nitrogen compound which may be regarded as being derived from triphenyl phosphine by replacing at least one of the phenyl groups therein by a group which contains only one nitrogen atom.

7. Catalyst compositions as claimed in claim 6, characterized in that as component c) they include a phosphorus/nitrogen compound chosen from the group formed by
2-cyano-ethyl-diphenyl phosphine,
2-pyridyl-diphenyl phosphine, and
3-(diphenyl-phosphino)-N,N-dimethyl propionamide.

8. Catalyst compositions as claimed in claim 5, characterized in that as component c) they include a phosphorus/nitrogen compound chosen from the group formed by tris(2-cyano-ethyl) phosphine and bis(2-pyridyl) phenyl phosphine.

9. Process for the preparation of polymers, characterized in that a mixture of carbon monoxide and one or more olefinically unsaturated organic compounds is polymerized by using a catalyst composition as claimed in any one of claims 1 to 8.

10. Process as claimed in claim 9, characterized in that the olefinically unsaturated compound is ethene or a mixture of ethene and propene.

## Patentansprüche

1. Katalysatorzusammensetzungen auf der Basis von
a) einer Palladiumverbindung,
b) einem Anion einer Säure mit einem pKa-Wert von kleiner als 2, mit der Maßgabe, daß die Säure nicht eine Halogenwasserstoffsäure ist, und
c) einer Verbindung, worin ein Phosphoratom und ein oder mehrere Stickstoffatome vorliegen, die keinen Wasserstoff tragen, in welcher Verbindung jedes der Stickstoffatome mit dem Phosphoratom über eine organische Brückengruppe verbunden ist, die wenigstens ein Kohlenstoffatom in der Brücke enthält, und welche Verbindung als von Tri (bydrocarbyl) phosphin durch Ersatz wenigstens einer der darin vorliegenden Hydrocarbylgruppen durch eine ein oder mehrere Stickstoffatome enthaltende Gruppe abgeleitet angesehen werden kann.

2. Katalysatorzusammensetzungen nach Anspruch 1, dadurch gekennzeichnet, daß sie auf eine Palladiumsalz einer Carbonsäure, wie Palladiumacetat, als Komponente a) und auf einem Anion einer Sulfonsäure, wie p-Toluolsulfonsäure, oder einer Carbonsäure, wie Trifluoressigsäure, als Komponente b) beruhen und daß die Komponente b) in den Katalysatorzusammensetzungen in einer Menge von 1,0 bis 100 Äquivalenten je Grammatom Palladium vorliegt.

3. Katalysatorzusammensetzungen nach Anspruch 1 oder 2, dadurch gekennzeichnet, daß die Komponente b) in den Katalisatorsuzammensetzungen in Form einer Säure oder als ein unedles Übergangsmetallsalz, wie ein Kupfersalz, eingebracht ist.

4. Katalysatorzusammensetzungen nach einem der Ansprüche 1 bis 3, dadurch gekennzeichnet, daß sie als Komponente c) eine Phosphor/Stickstoff-Verbindung einschließen, worin die organischen Brückengruppen, welche das Phosphoratom mit den Stickstoffatomen verbindet, höchstens drei Kohlenstoffatome enthalten.

5. Katalysatorzusammensetzungen nach einem der Ansprüche 1 bis 4, dadurch gekennzeichnet, daß sie als Komponente c) eine Phosphor/Stickstoff-Verbindung enthalten, die als von Triphenylphosphin durch Ersatz wenigstens einer der darin vorhandenen Phenylgruppen durch eine ein oder mehrere Stickstoffatome enthaltende Gruppe abgeleitet angesehen werden kann.

6. Katalysatorzusammensetzungen nach Anspruch 5, dadurch gekennzeichnet, daß sie als Komponente c) eine Phosphor/Stickstoff-Verbindung enthalten, die als von Triphenylphosphin durch Ersatz wenigstens einer der darin vorliegenden Phenylgruppen durch eine nur ein Stickstoffatom enthaltende Gruppe abgeleitet angesehen werden kann.

7. Katalysatorzusammensetzungen nach Anspruch 6, dadurch gekennzeichnet, daß sie als Komponente c) eine Phosphor/Stickstoff-Verbindung, ausgewählt aus der aus
2-Cyanoethyl-diphenylphosphin,
2-Pyridyl-diphenylphosphin und
3-(Diphenylphosphino)-N,N-dimethylpropionamid
bestehenden Gruppe, enthalten.

8. Katalysatorzusammensetzungen nach Anspruch 5, dadurch gekennzeichnet, daß sie als Komponente c) eine Phosphor/Stickstoff-Verbindung, ausgewählt aus der aus Tris(2-cyanoethyl)phosphin und Bis(2-pyridyl)-phenylphosphin bestehenden Gruppe, enthalten.

9. Verfahren zur Herstellung von Polymeren, dadurch gekennzeichnet, daß ein Gemisch aus Kohlenmonoxid und einer oder mehreren olefinisch ungesättigten organischen Verbindungen unter Anwendung einer Katalysatorzusammensetzung nach einem der Ansprüche 1 bis 8 polymerisiert wird.

10. Verfahren nach Anspruch 9, dadurch gekennzeichnet, daß ide olefinisch ungesättigte Verbindung Ethen oder ein Gemisch aus Ethen und Propen ist.

## Revendications

1. Compositions catalytiques à base de
a) un composé du palladium,
b) un anion d'un acide ayant un pKa de moins de 2, avec la condition que l'acide n'est pas un acide halogénhydrique et
c) un composé dans lequel il y a un atome de phosphore et un ou plusieurs atomes d'azote quine portent pas d'hydrogène, chacun des atomes d'azote dans le composé étant relié à l'atome de phosphore par un groupe organique formant pont qui contient au moins un atome de carbone dans le pont, ce composé pouvant être considéré comme dérivé d'une tri(hydrocarbyl) phosphine par remplacement d'au moins un des groupes hydrocarbyle de cette dernière par un groupe contenant un ou plusieurs atomes d'azote.

2. Compositions catalytiques selon la revendication 1, caractérisées en ce qu'elles sont à base d'un sel de palladium d'un acide carboxylique, comme l'acétate de palladium, comme constituant a) et d'un anion d'un acide sulfonique, comme l'acide para-toluènesulfonique, ou d'un acide carboxylique, comme l'acide trifluoroacétique, comme constituant b), et que le constituant b) est présent dans les compositions catalytiques à raison de 1,0 à 100 équivalents par atome-gramme de palladium.

3. Compositions catalytiques selon la revendication 1 ou 2, caractérisées en ce que le constituant b) est incorporé dans les compositions catalytiques sous la forme d'un acide ou sous la forme d'un sel d'un métal de transition non-noble, tel qu'un sel de cuivre.

4. Compositions catalytiques selon une ou plusieurs des revendications 1-3, caractérisées en ce que comme constituant c) elles comprennent un composé phosphore/ azote dans lequel les groupes organiques formant pont qui relient l'atome de phosphore aux atomes d'azote contiennent au maximum trois atomes de carbone.

5. Compositions catalytiques selon une ou plusieurs des revendications 1-4, caractérisées en ce que comme constituant c) elles comprennent un composé phosphore/ azote qui peut être considéré comme étant dérivé de la triphényl phosphine par remplacement d'au moins un des groupes phényle de cette dernière par un groupe contenant un ou plusieurs atomes d'azote.

6. Compositions catalytiques selon la revendication 5, caractérisées en ce que comme constituant c) elles comprennent un composé phosphore/azote qui peut être considéré comme étant dérivé de la triphényl phosphine par remplacement d'au moins un des groupes phényle de cette dernière par un groupe quine contient qu'un seul atome d'azote.

7. Compositions catalytiques selon la revendication 6, caractérisées en ce que comme constituant c) elles comprennent un composé phosphore/azote choisi dans le groupe formé par
la 2-cyano-éthyl-diphényl phosphine,
la 2-pyridyl-diphényl phosphine et

le 3-(diphényl-phosphino)-N,N-diméthyl propionamide.

8. Compositions catalytiques selon la revendication 5, caractérisées en ce que comme constituant c) elles comprennent un composé phosphore/azote choisi dans le groupe formé par la tris(2-cyano-éthyl) phosphine et la bis(2-pyridyl) phényl phosphine.

9. Procédé pour la préparation de polymères, caractérisé en ce qu'on polymérise un mélange de monoxyde de carbone et d'un ou plusieurs composés organiques oléfiniquement insaturés en utilisant une composition catalytique selon l'une quelconque des revendications 1 à 8.

10. Procédé selon la revendication 9, caractérisé en ce que le composé oléfiniquement insaturé est de l'éthène ou un mélange d'éthène et de propène.